# EUROPÄISCHE PATENTSCHRIFT

(11) **EP 4 155 578 B1**
(45) Veröffentlichungstag und Bekanntmachung des Hinweises auf die Patenterteilung: **18.12.2024**
(21) Anmeldenummer: 22197522.0
(22) Anmeldetag: 23.09.2022
(51) Int. Cl.: F16H 3/12, B60K 1/02, F16H 48/24, F16H 61/04

(54) **ANTRIEBSEINRICHTUNG FÜR EINEN KRAFTFAHRZEUGANTRIEBSSTRANG EINES ELEKTROFAHRZEUGS**
DRIVE DEVICE FOR A MOTOR VEHICLE DRIVE TRAIN OF AN ELECTRIC VEHICLE
DISPOSITIF D'ENTRAÎNEMENT POUR UNE CHAÎNE CINÉMATIQUE DE VÉHICULE AUTOMOBILE D'UN VÉHICULE ÉLECTRIQUE

(30) Priorität: 27.09.2021 DE 102021210727
(43) Veröffentlichungstag der Anmeldung: 29.03.2023
(73) Patentinhaber: ZF Friedrichshafen AG, 88046 Friedrichshafen (DE)
(72) Erfinder: Brilka, Tobias, 94547 Iggensbach (DE); Reitinger, Franz, 4092 Esternberg (AT); Pfeffer, Andreas, 94234 Viechtach (DE); Mühlbauer, Alexander, 94575 Windorf (DE)

(56) Entgegenhaltungen:
- EP-A1- 3 098 483
- AT-A1- 522 931
- CN-A- 109 780 143
- CN-U- 203 836 096
- CN-U- 206 329 684
- CN-U- 206 781 515
- US-A1- 2018 335 110

## Beschreibung

Die Erfindung betrifft eine Antriebseinrichtung für einen Kraftfahrzeugantriebsstrang eines Elektrofahrzeugs, insbesondere in Form eines geländegängigen Nutzfahrzeuges, umfassend mehrere Elektromaschinen und ein Getriebe, bei welchem zwischen einer Eingangswelle und einer Ausgangsseite unterschiedliche Übersetzungsverhältnisse schaltbar sind, wobei eine erste Elektromaschine mit der Eingangswelle des Getriebes verbunden oder verbindbar ist, wobei die Ausgangsseite des Getriebes mit mindestens einem Abtrieb gekoppelt ist, der in dem Kraftfahrzeugantriebsstrang jeweils der Anbindung je einer Antriebsachse des Elektrofahrzeugs dient, wobei eine zweite Elektromaschine permanent mit der Ausgangsseite in Verbindung steht, wobei neben der ersten Elektromaschine und der zweiten Elektromaschine mindestens noch eine weitere Elektromaschine vorgesehen ist, die jeweils über eine zwischenliegende Schaltkupplung mit der Eingangswelle verbindbar ist, und wobei bei dem Getriebe achsversetzt zu der Eingangswelle eine Vorgelegewelle vorgesehen ist. Des Weiteren betrifft die Erfindung einen Kraftfahrzeugantriebsstrang, ein Elektrofahrzeug sowie ein Verfahren zum Betreiben einer erfindungsgemäßen Antriebseinrichtung.

Bei Elektrofahrzeugen sind Antriebseinrichtungen bekannt, die sich häufig aus mindestens einer Elektromaschine und einem oder mehreren nachgeschalteten Getrieben zusammensetzen. Teilweise können dabei unterschiedliche Gänge geschaltet werden, um eine Antriebsbewegung der mindestens einen Elektromaschine mit unterschiedlichen Übersetzungsverhältnissen zu übersetzen.

Aus der DE 10 2016 006 208 A1 geht eine Antriebseinrichtung für einen Kraftfahrzeugantriebsstrang hervor, welcher für ein Elektrofahrzeug in Form eines Nutzfahrzeuges ausgestaltet ist. Diese Antriebseinrichtung umfasst dabei bei einer Variante zwei Elektromaschinen, denen ein Getriebe nachgeschaltet ist. Bei dem Getriebe können dabei unterschiedliche Übersetzungsverhältnisse geschaltet werden, um eine oder beide Elektromaschinen mit einer Ausgangsseite des Getriebes zu koppeln. Dabei ist die Ausgangsseite mit mindestens einem Abtrieb gekoppelt, an dem innerhalb des Kraftfahrzeugantriebsstranges je eine Antriebsachse des Elektrofahrzeuges angebunden ist.

Des Weiteren offenbart die AT 522 931 A1 eine Antriebseinrichtung, bei welcher zwei Elektromaschinen und ein Getriebe vorgesehen sind. Bei dem Getriebe können zwischen einer Eingangswelle und einer Ausgangsseite unterschiedliche Übersetzungsverhältnisse geschaltet werden, wobei die eine Elektromaschine dabei mit der Eingangswelle des Getriebes verbunden ist, während die Ausgangsseite des Getriebes mit mindestens einem Abtrieb gekoppelt ist, der in dem Kraftfahrzeugantriebsstrang jeweils der Anbindung je einer Antriebsachse eines Elektrofahrzeugs dient. Ferner steht die andere Elektromaschine permanent mit der Ausgangsseite in Verbindung. Weitere Antriebseinrichtungen gehen zudem auch aus der CN 2 06 781 515 U und der EP 3 098 483 A1 jeweils hervor.

Zudem offenbart noch die CN 206 329 684 U eine Antriebseinrichtung, wobei bei einer Variante der CN 206 329 684 U neben einem Getriebe mehrere Elektromaschinen vorgesehen sind. Zwei der Elektromaschinen können jeweils mit einer Eingangswelle des Getriebes verbunden werden, während zwei Elektromaschinen permanent mit einer Ausgangsseite des Getriebes in Verbindung stehen. Das Getriebe ist als Stirnradgetriebe gestaltet und weist neben der Eingangswelle zudem auch eine hierzu achsversetzt liegende Vorgelegewelle auf.

Ausgehend vom vorstehend beschriebenen Stand der Technik ist es nun die Aufgabe der vorliegenden Erfindung, eine Antriebseinrichtung für ein Elektrofahrzeug zu realisieren, wobei über diese Antriebseinrichtung ein hoher Fahrkomfort realisierbar sein soll.

Diese Aufgabe wird ausgehend vom Oberbegriff des Anspruchs 1 in Verbindung mit dessen kennzeichnenden Merkmalen gelöst. Die hierauf folgenden, abhängigen Ansprüche geben jeweils vorteilhafte Weiterbildungen der Erfindung wieder. Ein Kraftfahrzeugantriebsstrang, in welchem eine erfindungsgemäße Antriebseinrichtung vorgesehen ist, ist ferner Gegenstand der Ansprüche 7 und 8. Zudem betrifft Anspruch 9 ein Elektrofahrzeug mit einem vorgenannten Kraftfahrzeugantriebsstrang, während die Ansprüche 10 und 11 ein Verfahren zum Betreiben einer erfindungsgemäßen Antriebseinrichtung zum Gegenstand haben.

Gemäß der Erfindung umfasst eine Antriebseinrichtung mehrere Elektromaschinen und ein Getriebe, bei welchem zwischen einer Eingangswelle und einer Ausgangsseite unterschiedliche Übersetzungsverhältnisse geschaltet werden können. Dabei ist eine erste Elektromaschine mit der Eingangswelle des Getriebes verbunden oder kann mit dieser Eingangswelle verbunden werden, während die Ausgangsseite des Getriebes mit mindestens einem Abtrieb gekoppelt ist, der in dem Kraftfahrzeugantriebsstrang jeweils der Anbindung je einer Antriebsachse des Elektrofahrzeugs dient.

Bei der erfindungsgemäßen Antriebseinrichtung ist also neben mehreren Elektromaschinen ein Getriebe vorgesehen, welches über eine Eingangswelle verfügt, wobei diese Eingangswelle mit einer Ausgangsseite des Getriebes durch Schaltung je eines von mehreren, unterschiedlichen Übersetzungsverhältnissen gekoppelt werden kann. Es können also zwischen der Eingangswelle und der Ausgangsseite des Getriebes unterschiedliche Kraftflussführungen mit voneinander abweichenden Übersetzungen vorgenommen werden, wobei dies bevorzugt durch selektive Betätigung von Schaltelementen vorgenommen wird.

Innerhalb der erfindungsgemäßen Antriebseinrichtung ist die Ausgangsseite des Getriebes mit mindestens einem Abtrieb gekoppelt, wobei dieser mindestens eine Abtrieb im verbauten Zustand der Antriebseinrichtung in einem Kraftfahrzeugantriebsstrang für die Verbindung mit je einer Antriebsachse des Elektrofahrzeuges vorgesehen ist.

Von den Elektromaschinen ist eine erste Elektromaschine entweder permanent mit der Eingangswelle des Getriebes verbunden oder kann mit der Eingangswelle des Getriebes in Verbindung gebracht werden. Im erstgenannten Fall herrscht dabei zwischen der Elektromaschine und der Eingangswelle des Getriebes permanent ein konstantes Drehzahlverhältnis vor, so dass die Eingangswelle und ein Rotor der ersten Elektromaschine nicht unabhängig voneinander rotieren können. Hingegen kann die erste Elektromaschine im zweitgenannten Fall auch von der Eingangswelle des Getriebes entkoppelt sein und wird gezielt mit der Eingangswelle verbunden, wobei dies im Sinne der Erfindung bevorzugt über eine zwischenliegende Schaltkupplung vollzogen wird. Diese Schaltkupplung ist dabei insbesondere als formschlüssige Kupplung ausgebildet, wobei die formschlüssige Kupplung dabei besonders bevorzugt als unsynchronisierte Klauenkupplung oder als Sperrsynchronisation ausgeführt ist. Alternativ dazu kann eine zwischenliegende Schaltkupplung aber auch als kraftschlüssige Kupplung, beispielsweise als Reibkupplung oder Lamellenkupplung ausgestaltet sein.

Die erste Elektromaschine kann im Rahmen der Erfindung unmittelbar drehfest mit einer Anschlussstelle der Eingangswelle verbunden sein bzw. mit dieser Anschlussstelle verbindbar sein, indem die erste Elektromaschine direkt im Bereich der Anschlussstelle der Eingangswelle angeordnet ist. Alternativ dazu kommt aber auch eine versetzte Anordnung der ersten Elektromaschine zu einer Anschlussstelle der Eingangswelle in Betracht, wobei dann bevorzugt zwischenliegend eine Gelenkwelle zur drehfesten Verbindung bzw. drehfesten Verbindbarkeit der ersten Elektromaschine mit der Eingangswelle des Getriebes vorgesehen ist.

Die mehreren Elektromaschinen der erfindungsgemäßen Antriebseinrichtung setzen sich bevorzugt jeweils aus je einem Stator und je einem Rotor zusammen. Dabei können die Elektromaschinen im Einzelnen insbesondere jeweils zum einen als Generator betrieben werden, wobei die einzelne Elektromaschine in ihrem generatorischen Betrieb Strom erzeugt. Zum anderen kann die einzelne Elektromaschine auch als Elektromotor betrieben werden, wozu im elektromotorischen Betrieb der einzelnen Elektromaschine durch Stromversorgung eine Antriebsbewegung des jeweiligen Rotors erzeugt wird.

Die Erfindung umfasst nun die technische Lehre, dass eine zweite Elektromaschine permanent mit der Ausgangsseite in Verbindung steht. Mit anderen Worten ist also neben der ersten Elektromaschine, die mit der Eingangswelle verbunden ist oder mit dieser verbunden werden kann, noch eine zweite Elektromaschine vorgesehen, welche ständig mit der Ausgangsseite des Getriebes und damit auch mit dem mindestens einen Abtrieb gekoppelt ist. Zudem ist neben der ersten Elektromaschine und der zweiten Elektromaschine mindestens noch eine weitere Elektromaschine vorgesehen, die jeweils über eine zwischenliegende Schaltkupplung mit der Eingangswelle verbunden werden kann. Ferner ist bei dem Getriebe achsversetzt zu der Eingangswelle eine Vorgelegewelle vorgesehen, die permanent mit der Ausgangsseite gekoppelt ist. Dabei können die Eingangswelle und die Vorgelegewelle über eine erste Stirnradstufe und eine zweite Stirnradstufe jeweils miteinander gekoppelt werden, die sich jeweils aus je einem Festrad und je einem hiermit im Zahneingriff stehenden Losrad zusammensetzen. Bei den Stirnradstufen ist das jeweilige Festrad drehfest auf der Eingangs- oder der Vorgelegewelle angeordnet, während das jeweilige Losrad der jeweiligen Stirnradstufe drehbar auf der Vorgelege- oder der Eingangswelle gelagert ist und dort über je ein zugeordnetes Schaltelement festgesetzt werden kann. Des Weiteren ist die zweite Elektromaschine drehfest mit der Vorgelegewelle verbunden.

Eine derartige Ausgestaltung einer Antriebseinrichtung hat den Vorteil, dass durch die permanente Verbindung der zweiten Elektromaschine mit der Ausgangsseite des Getriebes und damit auch mit dem zumindest einen Abtrieb im verbauten Zustand der erfindungsgemäßen Antriebseinrichtung somit auch eine ständige Verbindung zu Antriebsrädern der mindestens einen Antriebsachse des Elektrofahrzeugs hergestellt ist. In der Folge kann über die zweite Elektromaschine problemlos ein Antrieb des Elektrofahrzeuges ohne Zugkraftunterbrechung verwirklicht werden. Zusätzlich kann zudem die erste Elektromaschine durch Schalten je eines der Übersetzungsverhältnisse des Getriebes eingebunden werden, wobei dabei eine Antriebsbewegung der ersten Elektromaschine über das Getriebe je nach Anforderung auf geeignete Art und Weise übersetzt werden kann. Insgesamt kann hierdurch über die Elektromaschinen und mittels Übersetzung einer Antriebsbewegung der ersten Elektromaschine durch das Getriebe ein großer Fahrbereich des Elektrofahrzeuges abgedeckt werden. Über die mindestens eine weitere Elektromaschine kann die insgesamt darstellbare Antriebsleistung weiter erhöht werden, wobei die mindestens eine Elektromaschine dabei ggf. auch nur in Sondersituationen, in denen eine besonders hohe Antriebsleistung zur Verfügung stehen muss, über die zwischenliegende Schaltkupplung zugeschaltet werden kann.

Die erste Elektromaschine und die zweite Elektromaschine können gemeinsam zu einem Antrieb des Elektrofahrzeuges genutzt werden, indem beide Elektromaschinen als Elektromotoren betrieben werden. Hierbei wird je nach darzustellendem Fahrbereich ein entsprechendes Übersetzungsverhältnis im Getriebe geschaltet, um die durch die erste Elektromaschine erzeugte Antriebsbewegung auf geeignete Art und Weise zu übersetzen. Ist dann ein Wechsel von einem Übersetzungsverhältnis des Getriebes in ein anderes Übersetzungsverhältnis sinnvoll oder notwendig, so kann auch im Zuge des Wechsels und dem damit einhergehenden, zumindest kurzzeitig eintretenden Trennen der ersten Elektromaschine von dem mindestens einen Abtrieb dennoch die Zugkraft über die zweite Elektromaschine aufrechterhalten werden. Somit kann bei Anwendung der erfindungsgemäßen Antriebseinrichtung in einem Kraftfahrzeugantriebsstrang ein hoher Fahrkomfort verwirklicht werden.

Die mindestens eine weitere Elektromaschine kann an einer Anschlussstelle der Eingangswelle über die zwischenliegende Schaltkupplung anbindbar sein, wobei alternativ dazu aber auch zwischenliegende Komponenten, wie beispielsweise eine Gelenkwelle, vorgesehen sein können.

In ihrem jeweiligen generatorischen Betrieb kann die einzelne Elektromaschine zudem für ein Abbremsen durch Rekuperation genutzt werden, wobei hierbei im Hinblick auf die erste Elektromaschine ebenfalls ein geeignetes Übersetzungsverhältnis im Getriebe geschaltet werden kann, um seitens der ersten Elektromaschine eine hohe Antriebsdrehzahl zu generieren. Über die zweite Elektromaschine kann hingegen aufgrund der permanenten Koppelung mit dem zumindest einen Abtrieb direkt ein Abbremsen durch Betrieb als Generator vorgenommen werden.

Das Getriebe ist als 2-stufiges Getriebe ausgeführt, indem zwischen der Eingangswelle und einer permanent mit der Ausgangsseite gekoppelten Vorgelegewelle zwei Stirnradstufen vorgesehen sind, über welche jeweils durch Betätigung je eines zugehörigen Schaltelements eine Kraftflussführung von der Eingangswelle auf die Vorgelegewelle und damit zu der Ausgangsseite vorgenommen werden kann. Besonders bevorzugt ist dabei das eine, über die eine Stirnradstufe darstellbare

Übersetzungsverhältnis als Straßengang konzipiert, während das bei Einbindung der anderen Stirnradstufe in den Kraftfluss dargestellt Übersetzungsverhältnis insbesondere einen Geländegang für das Elektrofahrzeug bildet. Im Rahmen der Erfindung könnte das Getriebe aber auch mehr als zwei schaltbare Stirnradstufen aufweisen.

Bei der einzelnen Stirnradstufe ist dabei jeweils ein Festrad und jeweils ein Losrad vorgesehen, die ständig miteinander im Zahneingriff stehen. Von diesen beiden Stirnrädern, welche bevorzugt jeweils mit einer Schrägverzahnung ausgestattet sind, ist eines auf der Eingangswelle und eines auf der Vorgelegewelle angeordnet. Dabei ist das Festrad der jeweiligen Stirnradstufe drehfest auf der jeweiligen Welle platziert, während das jeweilige Losrad drehbar auf der jeweiligen Welle gelagert und dort durch Betätigen des zugehörigen Schaltelements festgesetzt werden kann.

Durch die drehfeste Verbindung der zweiten Elektromaschine mit der Vorgelegewelle kann eine permanente Koppelung der zweiten Elektromaschine mit der Ausgangsseite des Getriebes und damit mit dem mindestens einen Abtrieb auf zuverlässige Art und Weise verwirklicht werden. Die zweite Elektromaschine kann dabei unmittelbar drehfest an der Vorgelegewelle angebunden sein, indem ein Rotor der zweiten Elektromaschine - ggf. über eine Rotorwelle - direkt an einer Anschlussstelle der Vorgelegewelle befestigt ist. Alternativ dazu kann es im Rahmen der Erfindung aber auch vorgesehen sein, dass die drehfeste Verbindung zwischen der zweiten Elektromaschine und der Vorgelegewelle über zwischenliegende Komponenten, wie beispielsweise eine Gelenkwelle, verwirklicht ist.

Hingegen können die Elektromaschinen bei der DE 10 2016 006 208 A1 nur durch Schaltung eines der Übersetzungsverhältnisse in dem Getriebe für einen Antrieb oder auch ein Abbremsen des Elektrofahrzeuges genutzt werden, da keine der Elektromaschinen permanent mit dem mindestens einen Abtrieb des Elektrofahrzeuges gekoppelt ist.

In Weiterbildung ist zumindest bei einer der beiden Stirnradstufen das jeweilige Festrad drehfest auf der Vorgelegewelle platziert und das jeweilige Losrad drehbar auf der Eingangswelle gelagert, wobei das jeweilige Festrad dieser Stirnradstufe zudem die Ausgangsseite des Getriebes bildet, indem an diesem Festrad die Koppelung mit dem mindestens einen Abtrieb hergestellt ist. In vorteilhafter Weise kann hierdurch das Festrad dieser Stirnradstufe dazu genutzt werden, um die ausgangsseitige Koppelung des Getriebes herzustellen. Dazu ist an der Verzahnung dieses Festrades bevorzugt neben dem Zahneingriff mit dem Losrad der Stirnradstufe noch ein Zahneingriff mit einer weiteren Verzahnung hergestellt, an der im verbauten Zustand der erfindungsgemäßen Antriebseinrichtung dann eine weitere Kraftflussführung zu dem zumindest einen Abtrieb und damit auch zu der jeweiligen Antriebsachse vorgenommen werden kann. Insbesondere sind bei dem Getriebe die Festräder beider Stirnradstufen drehfest auf der Vorgelegewelle angeordnet und die Losräder beider Stirnradstufen drehbar auf der Eingangswelle gelagert.

Alternativ oder ergänzend zu der vorgenannten Variante sind ein erstes Schaltelement und ein zweites Schaltelement zu einer Schalteinrichtung zusammengefasst, über deren Betätigungselement zum einen das erste Schaltelement sowie zum anderen das zweite Schaltelement betätigt werden kann. Dadurch kann eine Betätigung der beiden Schaltelemente über ein gemeinsames Betätigungselement vorgenommen werden, was den Herstellungsaufwand reduziert und zudem einen kompakten Aufbau ermöglicht. Besonders bevorzugt kann dieses Betätigungselement dabei neben einer ersten Schaltstellung, in welcher das erste Schaltelement betätigt ist, und einer zweiten Schaltstellung, in der das zweite Schaltelement betätigt ist, auch in einer Neutralstellung positioniert werden, in welcher weder das erste Schaltelement, noch das zweite Schaltelement in einen geschlossenen Zustand überführt ist. In vorteilhafter Weise besteht hierdurch die Möglichkeit, die erste Elektromaschine sowie ggf. eine weitere, hier vorgesehene Elektromaschine von der Ausgangsseite des Getriebes und damit auch dem zumindest einen Abtrieb zu entkoppeln. Hierdurch kann in bestimmten Fahrzuständen verhindert werden, dass die erste Elektromaschine und eine ggf. vorgesehene, weitere Elektromaschine mitgeschleppt werden.

Im Rahmen der Erfindung sind die Schaltelemente des Getriebes bevorzugt als formschlüssige Schaltelemente ausgebildet, wobei die Schaltelemente hierbei insbesondere als unsynchronisierte Klauenschaltelemente oder als Sperrsynchronisationen vorliegen. Alternativ dazu kommt aber auch eine Ausführung eines oder mehrerer Schaltelemente als kraftschlüssige Schaltelemente und hier insbesondere als Lamellenschaltelemente infrage.

Gemäß einer vorteilhaften Ausgestaltungsmöglichkeit der Erfindung ist von den Elektromaschinen die zweite Elektromaschine die leistungsstärkste Elektromaschine. Dies hat den Vorteil, dass somit im Betrieb der erfindungsgemäßen Antriebseinrichtung in einem Kraftfahrzeugantriebsstrang auch dann ein Antrieb des Elektrofahrzeuges aufrechterhalten werden kann, wenn im Getriebe gerade ein Wechsel zwischen Übersetzungsverhältnissen vollzogen und dementsprechend die erste Elektromaschine von dem mindestens einen Abtrieb getrennt ist. Dabei sollte eine über die zweite Elektromaschine darstellbare Antriebsleistung so gewählt werden, dass zumindest kurzzeitig ein alleiniger Antrieb des Elektrofahrzeuges in einem ausreichenden Maße vorgenommen werden kann.

Gemäß einer Ausgestaltungsmöglichkeit der Erfindung ist dem Getriebe an der Ausgangsseite eine Verteilereinrichtung nachgeschaltet, deren Antriebsseite mit der Ausgangsseite gekoppelt ist und der mehrere Abtriebe zugeordnet sind, die im Kraftfahrzeugantriebsstrang jeweils der Anbindung je einer Antriebsachse des Elektrofahrzeuges dienen. Hierdurch kann die Antriebseinrichtung bei einem Elektrofahrzeug mit Allradantrieb oder zuschaltbaren Allradantrieb Anwendung finden, indem über die nachgeschaltete Verteilereinrichtung eine Verteilung auf mehrere Abtriebe und damit im verbauten Zustand auf mehrere Antriebsachsen vorgenommen werden kann.

In Weiterbildung der vorgenannten Ausgestaltungsmöglichkeit umfasst die Verteilereinrichtung ein Differentialgetriebe, welches insbesondere als Planetendifferential ausgestaltet ist. Über das Differentialgetriebe kann eine an der Antriebsseite der Verteilereinrichtung eingeleitete Antriebsleistung auf Abtriebswellen aufgeteilt werden, die jeweils mit je einem der Abtriebe in Verbindung stehen. Besonders bevorzugt ist dem Differentialgetriebe zudem eine Sperreinrichtung zugeordnet, bei deren Betätigung eine starre Aufteilung auf die Abtriebe vorgenommen wird. Alternativ zu einer Ausführung als Planetendifferential kann das Differentialgetriebe aber auch als Kegelraddifferential ausgeführt sein. Zudem kommt im Rahmen der Erfindung prinzipiell auch eine Ausführung der Verteilereinrichtung in Betracht, bei welcher nur einer der Abtriebe permanent mit der Ausgangsseite des Getriebes gekoppelt ist, während ein oder mehrere weitere Abtriebe erst durch Betätigung je einer zugehörigen Kupplung mit der Antriebsseite der Verteilereinrichtung koppelbar sind.

Gegenstand der Erfindung ist zudem ein Kraftfahrzeugantriebsstrang für ein Elektrofahrzeug, wobei in diesem Kraftfahrzeugantriebsstrang dabei eine Antriebseinrichtung nach einer oder mehrerer der vorgenannten Varianten vorgesehen ist. Bei Ausführung der Antriebseinrichtung mit einer Verteilereinrichtung ist dabei dann bevorzugt mit einem Abtrieb mindestens eine antreibbare Vorderachse und mit einem anderen Abtrieb mindestens eine antreibbare Hinterachse trieblich verbunden. Insgesamt kann hierdurch ein Kraftfahrzeugantriebsstrang realisiert werden, bei welchem aufgrund der permanenten Koppelung der zweiten Elektromaschine mit dem Abtrieb oder den Abtrieben ein zugkraftunterbrechungsfreier Betrieb und damit auch ein hoher Komfort darstellbar ist.

Zudem betrifft die Erfindung ein Elektrofahrzeug, welches mit einem vorgenannten Kraftfahrzeugantriebsstrang ausgestattet ist. Dabei kann es sich bei diesem Elektrofahrzeug insbesondere um ein geländegängiges Nutzfahrzeug, wie einen Lastkraftwagen, handeln.

Gegenstand Erfindung ist außerdem ein Verfahren zum Betreiben einer erfindungsgemäßen Antriebseinrichtung. Dabei werden Wechsel zwischen Übersetzungsverhältnissen des Getriebes durchgeführt, indem im Zuge des jeweiligen Wechsels ein Wegfall je eines Antriebsdrehmoments zumindest der ersten Elektromaschine zumindest möglichst weitgehend durch Erhöhung eines Antriebsdrehmoments der zweiten Elektromaschine kompensiert wird. Werden also Wechsel zwischen Übersetzungsverhältnissen im Getriebe durchgeführt, was aufgrund einer Unterbrechung der Zugkraft eine vorübergehende Abkoppelung der ersten Elektromaschine und ggf. auch mindestens einer weiteren Elektromaschine zur Folge hat, so wird versucht, einen Wegfall eines Antriebsdrehmoments der ersten Elektromaschine und ggf. der mindestens einen weiteren Elektromaschine über die zweite Elektromaschine durch Erhöhung von deren Antriebsdrehmoment auszugleichen.

In Weiterbildung des vorgenannten Verfahrens wird im Zuge des jeweiligen Wechsels zumindest über die erste Elektromaschine ein Synchronisieren von Drehzahlen vorgenommen. Dies wird im Rahmen der Erfindung insbesondere dann realisiert, wenn Schaltelemente, über die Wechsel zwischen den Übersetzungsverhältnissen durchgeführt werden, als formschlüssige und hierbei insbesondere als unsynchronisierte Schaltelemente ausgeführt sind. Dabei kann durch Synchronisieren über die erste Elektromaschinen und ggf. die mindestens eine weitere Elektromaschine ein schnelles Schalten zwischen den Übersetzungsverhältnissen dargestellt werden.

Die Erfindung ist nicht auf die angegebene Kombination der Merkmale des Hauptanspruchs oder der hiervon abhängigen Ansprüche beschränkt. Es ergeben sich darüber hinaus Möglichkeiten, einzelne Merkmale, auch soweit sie aus den Ansprüchen, der nachfolgenden Beschreibung bevorzugter Ausführungsformen der Erfindung oder unmittelbar aus den Zeichnungen hervorgehen, miteinander zu kombinieren. Die Bezugnahme der Ansprüche auf die Zeichnungen durch Verwendung von Bezugszeichen soll den Schutzumfang der Ansprüche nicht beschränken.

Vorteilhafte Ausführungsformen der Erfindung, die nachfolgend erläutert werden, sind in den Zeichnungen dargestellt. Es zeigt:
- Fig. 1: eine schematische Darstellung eines Elektrofahrzeugs entsprechend einer bevorzugten Ausführungsform der Erfindung;
- Fig. 2: eine schematische Darstellung einer Antriebseinrichtung des Elektrofahrzeugs aus Fig. 1, entsprechend einer ersten Ausgestaltungsmöglichkeit der Erfindung;
- Fig. 3: eine schematische Einzelansicht eines Teils der Antriebseinrichtung aus Fig. 2; und
- Fig. 4: Diagramme mit verschiedenen Parameterverläufen im Zuge eines Wechsels eines Übersetzungsverhältnisses in einem Getriebe der Antriebseinrichtung aus den Fig. 2 und 3.

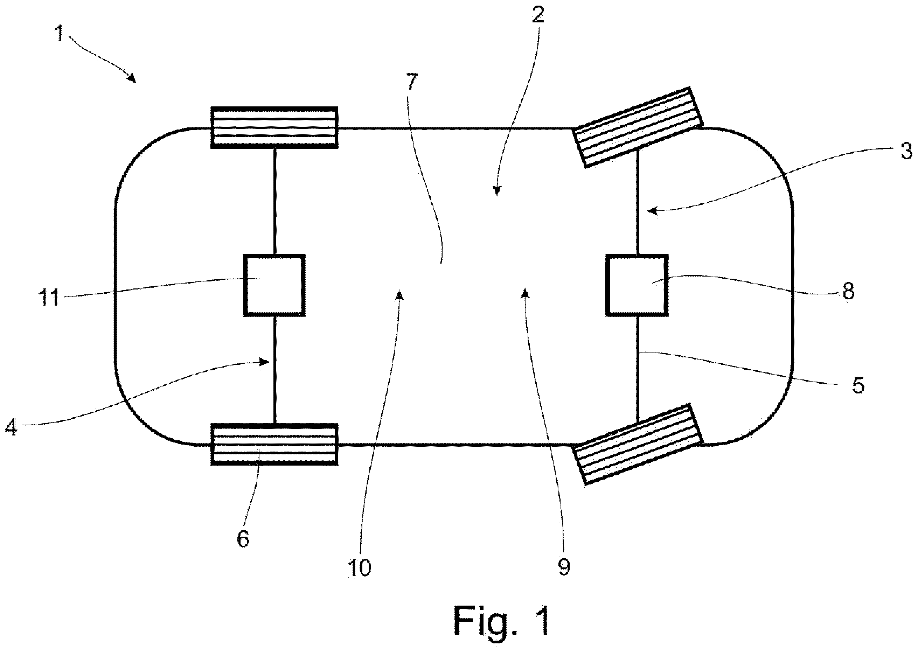

Fig. 1 zeigt eine schematische Ansicht eines Elektrofahrzeugs 1, bei welchem es sich insbesondere um ein geländefähiges Nutzfahrzeug und hierbei bevorzugt um einen Lkw handelt. Das Elektrofahrzeug 1 weist dabei einen Kraftfahrzeugantriebsstrang 2 auf, welcher mit zwei Antriebsachsen 3 und 4 ausgestattet ist. Dabei handelt es sich bei der Antriebsachse 3 um eine lenkbare Vorderachse 5 und bei der Antriebsachse 4 um eine nicht lenkbare Hinterachse 6. Insofern ist das Elektrofahrzeug 1 mit einem permanenten Allradantrieb ausgestattet.

Innerhalb des Kraftfahrzeugantriebsstranges 2 können die beiden Antriebsachsen 3 und 4 über eine Antriebseinrichtung 7 angetrieben werden, welche in Längsrichtung des Elektrofahrzeugs 1 zwischen den Antriebsachsen 3 und 4 platziert ist. Konkret ist dabei ein Achsdifferential 8 der Antriebsachse 3 an einem Abtrieb 9 der Antriebseinrichtung 7 angebunden, wobei die Antriebseinrichtung 7 zudem an einem Abtrieb 10 mit einem Achsdifferential 11 der Antriebsachse 4 in Verbindung steht.

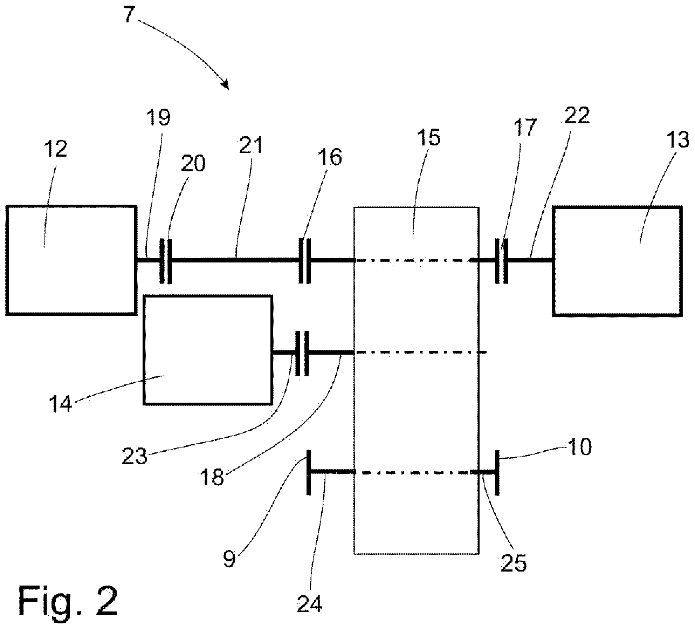

Aus Fig. 2 geht eine schematische Einzelansicht der Antriebseinrichtung 7 hervor, die entsprechend einer ersten Ausführungsform der Erfindung ausgebildet ist. Dabei umfasst diese Antriebseinrichtung 7 drei Elektromaschinen 12, 13 und 14 die sich jeweils - vorliegend nicht weiter dargestellt - aus je einem Rotor und je einem Stator zusammensetzen. Zudem können die Elektromaschinen 12 bis 14 jeweils zum einen als Generator sowie zum anderen als Elektromotor betrieben werden. Außerdem ist die Antriebseinrichtung 7 mit einer Getriebeeinheit 15 ausgestattet, welche in Fig. 2 nur schematisch dargestellt ist. Die Getriebeeinheit 15 ist mit mehreren Anschlussstellen 16, 17 und 18 ausgestattet, an denen jeweils je eine der Elektromaschinen 12 bis 14 drehfest angebunden ist. Dabei liegen die Anschlussstellen 16 und 17 koaxial zueinander, während die Anschlussstelle 18 achsversetzt zu den beiden Anschlussstellen 16 und 17 platziert ist.

Vorliegend ist die Elektromaschine 12 drehfest mit der Anschlussstelle 16 verbunden, indem eine Rotorwelle 19 eine drehfeste Verbindung zwischen dem Rotor der Elektromaschine 12 und einer Verbindungsstelle 20 herstellt, an welcher die Rotorwelle 19 und damit auch der Rotor der Elektromaschine 12 drehfest mit einer Gelenkwelle 21 verbunden ist. Über die Gelenkwelle 21 steht die Rotorwelle 19 mittelbar mit der Anschlussstelle 16 der Getriebeeinheit 15 in Verbindung, wozu die Gelenkwelle 21 mit einem entgegengesetzt zu der Rotorwelle 19 liegenden Ende an der Anschlussstelle 16 befestigt ist. Dabei ist die Elektromaschine 12 koaxial zu der Anschlussstelle 16 der Getriebeeinheit 15 platziert, wobei sie aber über die Gelenkwelle 21 auch unter einem Versatz zu der Anschlussstelle 16 liegen könnte.

Wie ferner in Fig. 2 zu erkennen ist, ist die Elektromaschine 13 mit einer Rotorwelle 22 drehfest an der Anschlussstelle 17 angebunden, wobei die Rotorwelle 22 dabei innerhalb der Elektromaschine 13 drehfest mit dem Rotor der Elektromaschine 13 in Verbindung steht. Hierbei ist die Elektromaschine 13 mit der Rotorwelle 22 koaxial zu der Anschlussstelle 17 angeordnet.

Bei der Elektromaschine 14 ist eine Rotorwelle 23 drehfest mit dem Rotor der Elektromaschine 14 verbunden, wobei die Rotorwelle 23 zudem mit einem Wellenende drehfest an der Anschlussstelle 18 der Getriebeeinheit 15 befestigt ist. Vorliegend ist dabei die Elektromaschine 14 und damit auch die Rotorwelle 23 koaxial zu der Anschlussstelle 18 der Getriebeeinheit 15 angeordnet.

Die Getriebeeinheit 15 ist mit zwei Abtriebswellen 24 und 25 ausgestattet, welche koaxial zueinander und achsversetzt zu den Anschlussstellen 16 bis 18 liegen. Dabei bilden diese Abtriebswellen 24 und 25 an einander abgewandt liegenden Wellenenden die beiden Abtriebe 9 und 10, an denen innerhalb des in Fig. 1 zu sehenden Kraftfahrzeugantriebsstranges 2 des Elektrofahrzeugs 1 jeweils die Verbindung zu der je zugehörigen Antriebsachse 3 bzw. 4 hergestellt ist.

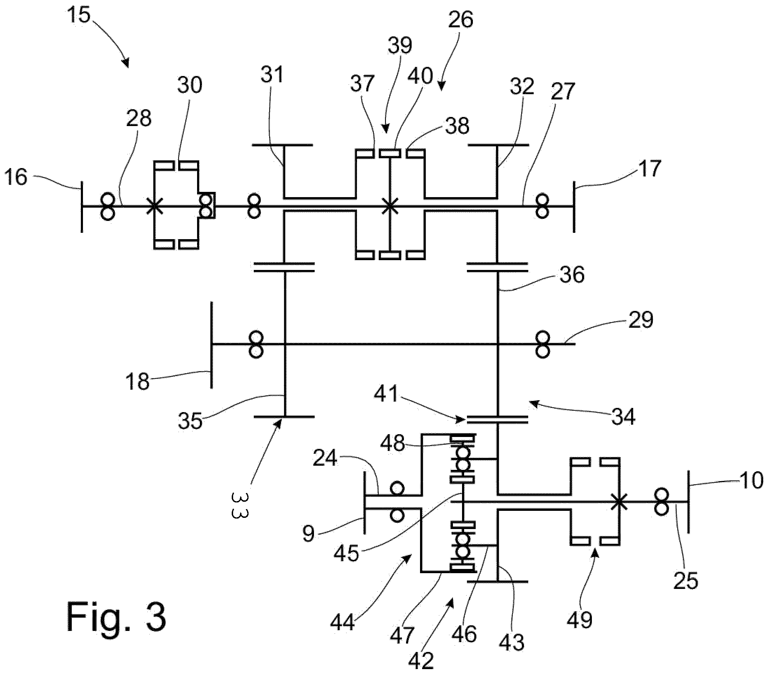

In Fig. 3 ist die Getriebeeinheit 15 zudem einzeln schematisch dargestellt. Wie hier zu erkennen ist, umfasst die Getriebeeinheit 15 ein Getriebe 26, bei welchem neben einer Eingangswelle 27 noch einer Anschlusswelle 28 und eine Vorgelegewelle 29 vorgesehen sind. Dabei bildet die Anschlusswelle 28 an einem Wellenende die Anschlussstelle 16 aus und kann über eine zwischenliegende Schaltkupplung 30 drehfest mit der koaxial hierzu liegenden Eingangswelle 27 verbunden werden. Die Schaltkupplung 30 ist dabei als formschlüssige Kupplung in Form einer unsynchronisierten Klauenkupplung ausgebildet.

An einem der Anschlusswelle 28 axial abgewandt liegenden Ende bildet die Eingangswelle 27 die Anschlussstelle 17 aus, wobei auf der Eingangswelle 27 zudem zwei Losräder 31 und 32 drehbar gelagert sind, die jeweils Teil je einer Stirnradstufe 33 bzw. 34 sind. Dabei steht das Losrad 31 bei der Stirnradstufe 33 permanent mit einem Festrad 35 im Zahneingriff, welches drehfest auf der Vorgelegewelle 29 angeordnet ist. Die Vorgelegewelle 29 ist dabei achsversetzt zu der Eingangswelle 27 und auch der Anschlusswelle 28 platziert und bildet an einem Wellenende die Anschlussstelle 18 aus. Neben dem Festrad 35 ist noch ein Festrad 36 der Stirnradstufe 34 drehfest auf der Vorgelegewelle 29 angeordnet, wobei das Festrad 36 innerhalb der Stirnradstufe 34 ständig mit dem Losrad 32 kämmt.

Bei dem Getriebe 26 können nun zwei unterschiedliche Übersetzungsverhältnisse geschaltet werden, indem eine Kraftflussführung ausgehend von der Eingangswelle 27 entweder über die Stirnradstufe 33 oder über die Stirnradstufe 34 auf die Vorgelegewelle 29 vorgenommen wird. Zu diesem Zweck ist das Getriebe 26 mit zwei Schaltelementen 37 und 38 ausgestattet, von denen das Schaltelement 37 bei Betätigung das Losrad 31 an der Eingangswelle 27 festsetzt und dementsprechend eine Führung des Kraftflusses von der Eingangswelle 27 über die Stirnradstufe 33 auf die Vorgelegewelle 29 bewirkt. Hingegen setzt das Schaltelement 38 bei Betätigung das Losrad 32 an der Eingangswelle 27 fest und sorgt dementsprechend für eine Koppelung der Eingangswelle 27 und der Vorgelegewelle 29 über die Stirnradstufe 34.

Die Schaltelemente 37 und 38 sind im vorliegenden Fall als formschlüssige Schaltelemente ausgebildet, wobei sie als unsynchronisierte Klauenschaltelemente vorliegen. Dabei sind die beiden Schaltelemente 37 und 38 zu einer Schalteinrichtung 39 zusammengefasst, der ein Betätigungselement 40 zugeordnet ist, wobei über das Betätigungselement 40 aus einer Neutralstellung heraus einerseits das Schaltelement 37 sowie andererseits das Schaltelement 38 in einen jeweils betätigten Zustand überführt werden kann. In der Neutralstellung des Betätigungselements 40, bei welchem es sich bevorzugt um eine Schiebemuffe handelt, wird hingegen keines der Schaltelemente 37 und 38 betätigt, wodurch auch keines der Losräder 31 und 32 festgesetzt und dementsprechend die Eingangswelle 27 von der Vorgelegewelle 29 entkoppelt ist.

Das Festrad 36 der Stirnradstufe 34 bildet zudem eine Ausgangsseite 41 des Getriebes 26, indem an dem Festrad 36 permanent eine Verbindung zu einer Verteilereinrichtung 42 hergestellt ist. Diese Verteilereinrichtung 42 ist dabei dem Getriebe 26 innerhalb der Getriebeeinheit 15 nachgeschaltet und verfügt über ein Stirnrad 43, welches permanent mit dem Festrad 36 im Zahneingriff steht. Die Verteilereinrichtung 42 verfügt außerdem über ein Differentialgetriebe 44, welches vorliegend als Planetendifferential ausgestaltet ist und sich dabei aus einem Sonnenrad 45, einem Planetensteg 46 und einem Hohlrad 47 zusammensetzt. In dem Planetensteg 46 sind dabei mehrere Planetenräder 48 drehbar gelagert, die im Einzelnen jeweils sowohl mit dem Sonnenrad 45, als auch dem Hohlrad 47 im Zahneingriff stehen.

Während der Planetensteg 46 vorliegend drehfest mit dem Stirnrad 43 verbunden ist, steht das Sonnenrad 45 drehfest mit der Abtriebswelle 25 und das Hohlrad 47 drehfest mit der Abtriebswelle 24 in Verbindung. Über das Differentialgetriebe 44 wird dabei eine Verteilung einer über die Ausgangsseite 41 des Getriebes 26 eingeleiteten Antriebsleistung auf die beiden Abtriebswellen 24 und 25 vorgenommen, wobei über das Differentialgetriebe 44 dabei unterschiedliche Drehzahlen der Abtriebswellen 24 und 25 zugelassen werden können. Dabei kann diese Wirkung des Differentialgetriebes 44 aber über eine Sperreinrichtung 49 gezielt gesperrt werden, welche als Schaltkupplung ausgebildet ist und bei Betätigung das Stirnrad 43 drehfest mit der Abtriebswelle 25 verbindet, was ein Verblocken des Planetendifferentials zur Folge hat.

Aufgrund der drehfesten Anbindung der Elektromaschine 14 an der Anschlussstelle 18 der Getriebeeinheit 15 und der permanenten Koppelung der Vorgelegewelle 29 mit den Abtrieben 9 und 10 über die Verteilereinrichtung 42 ist auch die Elektromaschine 14 permanent mit den Abtrieben 9 und 10 gekoppelt. Dementsprechend kann die Elektromaschine 14 ständig für einen Antrieb des Elektrofahrzeuges 1 in ihrem elektromotorischen Betrieb oder aber für ein Abbremsen des Elektrofahrzeuges in ihrem generatorischen Betrieb herangezogen werden. Hierbei ist die Elektromaschine 14 von den Elektromaschinen 12 bis 14 als leistungsstärkste Maschine ausgeführt.

Hingegen wird die an der Anschlussstelle 17 angebundene Elektromaschine 13 nur dann mit den Abtrieben 9 und 10 gekoppelt, wenn eines der Schaltelemente 37 und 38 betätigt und dementsprechend eines der beiden Übersetzungsverhältnisse des Getriebes 26 geschaltet ist. Gleiches ist auch hinsichtlich der Elektromaschine 12 der Fall, wobei hierbei zusätzlich die Schaltkupplung 30 zu betätigen ist. Über die Übersetzungsverhältnisse des Getriebes 26 können dabei Antriebsbewegungen einer oder beider Elektromaschine 12 und 13 auf die Vorgelegewelle 29 in ihrem jeweiligen elektromotorischen Betrieb übersetzt oder aber ihre jeweilige Bremswirkung in ihrem jeweiligen generatorischen Betrieb verändert werden. Bei dem Getriebe 26 ist dabei das eine Übersetzungsverhältnis als Straßengang konzipiert, während das andere Übersetzungsverhältnis als Geländegang ausgebildet ist.

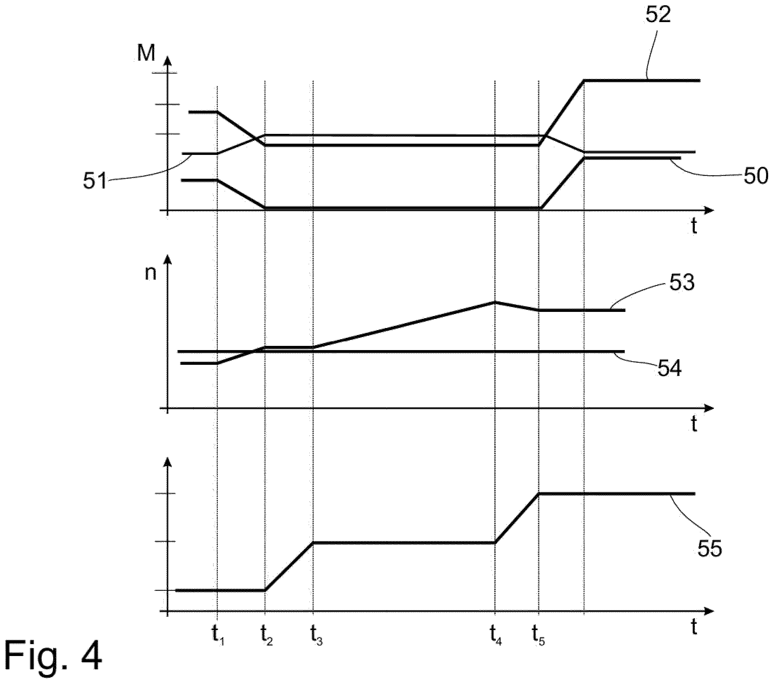

In Fig. 4 sind Ablaufdiagramme verschiedener Parameter im Zuge eines Wechsels zwischen den Übersetzungsverhältnissen des Getriebes 26 beispielhaft dargestellt, wobei dies für die Durchführung einer Rückschaltung im Getriebe 26 und für einen Zustand der Antriebseinrichtung 7 gezeigt ist, in welchem die Elektromaschine 12 über die Schaltkupplung 30 abgekoppelt ist. Dabei sind in dem obersten Diagramm Antriebsdrehmomente M über der Zeit t aufgetragen, wobei eine Linie 50 dabei ein Antriebsdrehmoment der Elektromaschine 13, eine Linie 51 ein Antriebsdrehmoment der Elektromaschine 14 und eine Linie 52 eine Summe bei der Antriebsdrehmomente der Elektromaschinen 13 und 14 darstellt.

Hingegen sind in dem mittleren Diagramm Drehzahlen n über der Zeit t aufgetragen, wobei von Linien 53 und 54 die Linie 53 dabei den Drehzahlverlauf der Elektromaschine 13 im Zuge des Wechsels darstellt, während die Linie 54 den Drehzahlverlauf der Elektromaschine 14 wiedergibt. Schließlich ist noch in dem untersten Diagramm eine Schaltposition des Betätigungselements 40 über der Zeit t aufgetragen und anhand der Linie 55 wiedergegeben.

Wie aus den Diagrammen in Fig. 4 ersichtlich ist, befindet sich das Betätigungselement 40 zu Beginn des Wechsels in seiner einen Schaltstellung, in welcher in dem Getriebe 26 das eine Übersetzungsverhältnis geschaltet ist. Zu einem ersten Zeitpunkt t₁ liegt dann eine Anforderung zum Wechsel des Übersetzungsverhältnisses im Getriebe 26 vor, woraufhin bei der Elektromaschine 13 das Antriebsdrehmoment reduziert sowie die Drehzahl auf eine Zieldrehzahl erhöht wird, um bezüglich des jeweils betätigten und im Folgenden zu öffnenden Schaltelement 37 oder 38 synchrone Drehzahlen einzustellen und dieses problemlos auslegen zu können. Gleichzeitig wird ein Antriebsdrehmoment der Elektromaschine 14 erhöht, um die Reduzierung der Summe der Antriebsdrehmomente möglichst gering zu halten und damit die Auswirkung des Gangwechsels möglichst wenig bemerkbar zu machen.

Zu einem Zeitpunkt t₂ haben sich dann synchrone Drehzahlen an dem zu öffnenden Schaltelement 37 oder 38 eingestellt, worauf hin das Betätigungselement 40 in Richtung seiner Neutralstellung bewegt wird. Antriebsdrehmomente der beiden Elektromaschinen 13 und 14 werden dabei ab diesem Zeitpunkt konstant gehalten. Ab einem Zeitpunkt t₃ ist das Betätigungselement 40 dann in seiner Neutralstellung bewegt und dementsprechend die Eingangswelle 27 und damit auch die hiermit gekoppelte Elektromaschine 13 von der Vorgelegewelle 29 entkoppelt. Ab Erreichen der Neutralstellung wird eine Drehzahl der Elektromaschine 13 erhöht, um an dem im Folgenden zu betätigenden Schaltelement 38 bzw. 37 synchrone Drehzahlen einzustellen.

Diese Synchrondrehzahlen werden dabei zu einem Zeitpunkt t₄ erreicht, woraufhin das Betätigungselement 40 nun aus der Neutralstellung in Richtung der Schaltstellung bewegt wird, in der das Schaltelement 38 bzw. 37 betätigt ist. Dieser Vorgang ist dabei zu einem Zeitpunkt t₅ abgeschlossen, so dass nun das Übersetzungsverhältnis in dem Getriebe 26 geschaltet ist. Ab dem Zeitpunkt t₅ wird nun auch das Antriebsdrehmoment der Antriebsmaschine 13 wieder erhöht, wodurch sich auch die Summe der Antriebsdrehmomente entsprechend steigert. Dabei wird eine Antriebsbewegung der Elektromaschine 13 nun über das Getriebe 26 mit dem geschalteten Übersetzungsverhältnis übersetzt.

Mittels der erfindungsgemäßen Ausgestaltungen einer Antriebseinrichtung kann bei einem Elektrofahrzeug ein hoher Fahrkomfort realisiert werden.

### Bezuaszeichen

- 1: Elektrofahrzeug
- 2: Kraftfahrzeugantriebsstrang
- 3: Antriebsachse
- 4: Antriebsachse
- 5: Vorderachse
- 6: Hinterachse
- 7: Antriebseinrichtung
- 8: Achsdifferential
- 9: Abtrieb
- 10: Abtrieb
- 11: Achsdifferential
- 12: Elektromaschine
- 13: Elektromaschine
- 14: Elektromaschine
- 15: Getriebeeinheit
- 16: Anschlussstelle
- 17: Anschlussstelle
- 18: Anschlussstelle
- 19: Rotorwelle
- 20: Verbindungsstelle
- 21: Gelenkwelle
- 22: Rotorwelle
- 23: Rotorwelle
- 24: Abtriebswelle
- 25: Abtriebswelle
- 26: Getriebe
- 27: Eingangswelle
- 28: Anschlusswelle
- 29: Vorgelegewelle
- 30: Schaltkupplung
- 31: Losrad

- 32: Losrad
- 33: Stirnradstufe
- 34: Stirnradstufe
- 35: Festrad
- 36: Festrad
- 37: Schaltelement
- 38: Schaltelement
- 39: Schalteinrichtung
- 40: Betätigungselement
- 41: Ausgangsseite
- 42: Verteilereinrichtung
- 43: Stirnrad
- 44: Differentialgetriebe
- 45: Sonnenrad
- 46: Planetensteg
- 47: Hohlrad
- 48: Planetenräder
- 49: Sperreinrichtung
- 50: Linie
- 51: Linie
- 52: Linie
- 53: Linie
- 54: Linie
- 55: Linie

- M: Antriebsdrehmoment
- n: Drehzahl
- t: Zeit
- t₁ bis t₅: Zeitpunkte

## Patentansprüche

1. Antriebseinrichtung (7) für einen Kraftfahrzeugantriebsstrang (2) eines Elektrofahrzeugs (1), insbesondere in Form eines geländegängigen Nutzfahrzeuges, umfassend mehrere Elektromaschinen (12, 13, 14) und ein Getriebe (26), bei welchem zwischen einer Eingangswelle (27) und einer Ausgangsseite (41) unterschiedliche Übersetzungsverhältnisse schaltbar sind, wobei eine erste Elektromaschine (13) mit der Eingangswelle (27) des Getriebes (26) verbunden oder verbindbar ist, wobei die Ausgangsseite (41) des Getriebes (26) mit mindestens einem Abtrieb (9, 10) gekoppelt ist, der in dem Kraftfahrzeugantriebsstrang (2) jeweils der Anbindung je einer Antriebsachse (3, 4) des Elektrofahrzeugs (1) dient, wobei eine zweite Elektromaschine (14) permanent mit der Ausgangsseite (41) in Verbindung steht, wobei neben der ersten Elektromaschine (13) und der zweiten Elektromaschine (14) mindestens noch eine weitere Elektromaschine (12) vorgesehen ist, die jeweils über eine zwischenliegende Schaltkupplung (30) mit der Eingangswelle (27) verbindbar ist, und wobei bei dem Getriebe (26) achsversetzt zu der Eingangswelle (27) eine Vorgelegewelle (29) vorgesehen ist, **dadurch gekennzeichnet, dass** die Vorgelegewelle (29) permanent mit der Ausgangsseite (41) gekoppelt ist, dass die Eingangswelle (27) und die Vorgelegewelle (29) über eine erste Stirnradstufe (33) und eine zweite Stirnradstufe (34) jeweils miteinander koppelbar sind, die sich jeweils aus je einem Festrad (35, 36) und je einem hiermit im Zahneingriff stehenden Losrad (31, 32) zusammensetzen, wobei bei den Stirnradstufen (33, 34) das jeweilige Festrad (35, 36) drehfest auf der Eingangs- oder der Vorgelegewelle (29) angeordnet ist, während das jeweilige Losrad (31, 32) der jeweiligen Stirnradstufe (33, 34) drehbar auf der Vorgelege- oder der Eingangswelle (27) gelagert und dort über je ein zugeordnetes Schaltelement (37, 38) festsetzbar ist, und dass die zweite Elektromaschine (14) drehfest mit der Vorgelegewelle (29) verbunden ist.

2. Antriebseinrichtung (7) nach Anspruch 1, **dadurch gekennzeichnet, dass** zumindest bei einer der beiden Stirnradstufen (33, 34) das jeweilige Festrad (35, 36) drehfest auf der Vorgelegewelle (29) platziert und das jeweilige Losrad (31, 32) drehbar auf der Eingangswelle (27) gelagert ist, wobei das jeweilige Festrad (36) dieser Stirnradstufe (34) zudem die Ausgangsseite (41) des Getriebes (26) bildet, indem an diesem Festrad (36) die Koppelung mit dem mindestens einen Abtrieb (9, 10) hergestellt ist.

3. Antriebseinrichtung (7) nach Anspruch 1 oder 2, **dadurch gekennzeichnet, dass** ein erstes Schaltelement (37) und ein zweites Schaltelement (38) zu einer Schalteinrichtung (39) zusammengefasst sind, über deren Betätigungselement (40) zum einen das erste Schaltelement (37) sowie zum anderen das zweite Schaltelement (38) betätigbar ist.

4. Antriebseinrichtung (7) nach einem der vorhergehenden Ansprüche, **dadurch gekennzeichnet, dass** von den Elektromaschinen (12, 13, 14; 13, 14) die zweite Elektromaschine (14) die leistungsstärkste Elektromaschine ist.

5. Antriebseinrichtung (7) nach einem der vorhergehenden Ansprüche, **dadurch gekennzeichnet, dass** dem Getriebe (26) an der Ausgangsseite (41) eine Verteilereinrichtung (42) nachgeschaltet ist, deren Antriebsseite mit der Ausgangsseite (41) gekoppelt ist und der mehrere Abtriebe (9, 10) zugeordnet sind, die im Kraftfahrzeugantriebsstrang jeweils der Anbindung je einer Antriebsachse (2, 3) des Elektrofahrzeugs (1) dienen.

6. Antriebseinrichtung (7) nach Anspruch 5, **dadurch gekennzeichnet, dass** die Verteilereinrichtung (42) ein Differentialgetriebe (44), insbesondere ein Planetendifferential, umfasst, wobei über das Differentialgetriebe (44) eine an der Antriebsseite der Verteilereinrichtung (42) eingeleitete Antriebsleistung auf Abtriebswellen (24, 25) aufteilbar ist, die jeweils mit je einem der Abtriebe (9, 10) in Verbindung stehen.

7. Kraftfahrzeugantriebsstrang (2) für ein Elektrofahrzeug (1), insbesondere in Form eines geländegängigen Nutzfahrzeuges, umfassend eine Antriebseinrichtung (7) nach einem oder mehreren der Ansprüche 1 bis 6.

8. Kraftfahrzeugantriebsstrang (2) nach Anspruch 7 und mit einer Antriebseinrichtung nach Anspruch 5 oder 6, **dadurch gekennzeichnet, dass** mit einem Abtrieb (9) der Antriebseinrichtung (7) mindestens eine antreibbare Vorderachse (5) und mit einem anderen Abtrieb (10) der Antriebseinrichtung (7) mindestens eine antreibbare Hinterachse (6) trieblich verbunden ist.

9. Elektrofahrzeug (1), insbesondere in Form eines geländegängigen Nutzfahrzeuges, umfassend einen Kraftfahrzeugantriebsstrang nach Anspruch 7 oder 8.

10. Verfahren zum Betreiben einer Antriebseinrichtung (7) nach einem oder mehreren der Ansprüche 1 bis 6, **dadurch gekennzeichnet, dass** Wechsel zwischen Übersetzungsverhältnissen des Getriebes (26) durchgeführt werden, indem im Zuge des jeweiligen Wechsels ein Wegfall je eines Antriebsdrehmoments zumindest der ersten Elektromaschine (13) zumindest möglichst weitgehend durch Erhöhung eines Antriebsdrehmoments der zweiten Elektromaschine (14) kompensiert wird.

11. Verfahren nach Anspruch 10, **dadurch gekennzeichnet, dass** im Zuge des jeweiligen Wechsels zumindest über die erste Elektromaschine (13) ein Synchronisieren von Drehzahlen vorgenommen wird.

## Claims

1. Drive device (7) for a motor vehicle drivetrain (2) of an electric vehicle (1), in particular in the form of an off-road commercial vehicle, comprising a plurality of electric machines (12, 13, 14) and a transmission (26) in which different gear ratios between an input shaft (27) and an output side (41) are able to be selected, wherein a first electric machine (13) is connected, or connectable, to the input shaft (27) of the transmission (26), wherein the output side (41) of the transmission (26) is coupled to at least one output (9, 10) which in the motor vehicle drivetrain (2) serves in each case to link in each case one drive axle (3, 4) of the electric vehicle (1), wherein a second electric machine (14) is permanently connected to the output side (41), wherein provided apart from the first electric machine (13) and the second electric machine (14) is also at least one further electric machine (12) which is in each case connectable to the input shaft (27) by way of an intervening shifting clutch (30), and wherein provided in the transmission (26) is a layshaft (29) which is axially offset from the input shaft (27), **characterized in that** the layshaft (29) is permanently coupled to the output side (41), **in that** the input shaft (27) and the layshaft (29) are in each case able to be coupled to one another by way of a first spur gear stage (33) and a second spur gear stage (34), which each are composed of in each case one fixed gear (35, 36) and in each case one idler gear (31, 32) meshing with the latter, wherein in the spur gear stages (33, 34) the respective fixed gear (35, 36) is co-rotationally disposed on the input shaft or layshaft (29), while the respective idler gear (31, 32) of the respective spur gear stage (33, 34) is rotatably mounted on the layshaft or input shaft (27) and is able to be fixedly established thereon by way of in each case one assigned switching element (37, 38), and **in that** the second electric machine (14) is co-rotationally connected to the layshaft (29).

2. Drive device (7) according to Claim 1, **characterized in that** at least one of the two spur gear stages (33, 34) places the respective fixed gear (35, 36) so as to be rotatable on the layshaft (29), and the respective idler gear (31, 32) is rotatably mounted on the input shaft (27), wherein the respective fixed gear (36) of this spur gear stage (34) moreover forms the output side (41) of the transmission (26) **in that** the coupling to the at least one output (9, 10) is established on this fixed gear (36).

3. Drive device (7) according to Claim 1 or 2, **characterized in that** a first switching element (37) and a second switching element (38) are combined so as to form a switching device (39), the first switching element (37), on the one hand, and the second switching element (38), on the other hand, being able to be activated by way of the activating element (40) of said switching device (39).

4. Drive device (7) according to one of the preceding claims, **characterized in that** of the electric machines (12, 13, 14; 13, 14), the second electric machine (14) is the electric machine with the highest output.

5. Drive device (7) according to one of the preceding claims, **characterized in that** disposed downstream of the transmission (26) on the output side (41) is a transfer device (42), the drive side of the latter being coupled to the output side (41) and being assigned a plurality of outputs (9, 10) which in the motor vehicle drivetrain serve in each case to link in each case one drive axle (2, 3) of the electric vehicle (1).

6. Drive device (7) according to Claim 5, **characterized in that** the transfer device (42) comprises a differential gearbox (44), in particular a planetary differential, wherein a drive output which by way of the differential gearbox (44) is introduced on the drive side of the transfer device (42) is able to be transferred to output shafts (24, 25) which each are connected in each case to one of the outputs (9, 10).

7. Motor vehicle drivetrain (2) for an electric vehicle (1), in particular in the form of an off-road commercial vehicle, comprising a drive device (7) according to one or a plurality of Claims 1 to 6.

8. Motor vehicle drivetrain (2) according to Claim 7, and having a drive device according to Claim 5 or 6, **characterized in that** operatively connected to an output (9) of the drive device (7) is at least one drivable front axle (5), and operatively connected to another output (10) of the drive device (7) is at least one drivable rear axle (6).

9. Electric vehicle (1), in particular in the form of an off-road commercial vehicle, comprising a motor vehicle drivetrain according to Claim 7 or 8.

10. Method for operating a drive device (7) according to one or a plurality of Claims 1 to 6, **characterized in that** changes between gear ratios of the transmission (26) are carried out **in that** in the course of the respective change a shortfall of in each case one drive torque at least of the first electric machine (13) is at least ideally largely compensated for by increasing a drive torque of the second electric machine (14).

11. Method according to Claim 10, **characterized in that** in the course of the respective change a synchronization of rotating speeds is performed at least by way of the first electric machine (13).

## Revendications

1. Dispositif d'entraînement (7) destiné à une chaîne cinématique de véhicule automobile (2) d'un véhicule électrique (1), notamment sous forme de véhicule utilitaire tout-terrain, ledit dispositif d'entraînement comprenant plusieurs machines électriques (12, 13, 14) et une transmission (26), dans laquelle différents rapports de changement de vitesses peuvent être commutés entre un arbre d'entrée (27) et un côté sortie (41), une première machine électrique (13) étant reliée ou pouvant être reliée à l'arbre d'entrée (27) de la transmission (26), le côté sortie (41) de la transmission (26) étant accouplé à au moins une sortie (9, 10) qui sert au raccordement d'un essieu d'entraînement (3, 4) du véhicule électrique (1) dans la chaîne cinématique de véhicule automobile (2), une deuxième machine électrique (14) étant reliée en permanence au côté sortie (41), au moins une autre machine électrique (12), qui peut être reliée à l'arbre d'entrée (27) par le biais d'un embrayage intermédiaire (30), étant prévue en plus de la première machine électrique (13) et de la deuxième machine électrique (14), et un arbre intermédiaire (29) étant prévu dans la transmission (26) qui est décalé axialement par rapport à l'arbre d'entrée (27), **caractérisé en ce que** l'arbre intermédiaire (29) est accouplé en permanence au côté sortie (41), **en ce que** l'arbre d'entrée (27) et l'arbre intermédiaire (29) peuvent être accouplés l'un à l'autre par le biais d'un premier étage à pignon droit (33) et d'un deuxième étage à pignon droit (34) qui sont chacun composés d'un pignon fixe (35, 36) et d'un pignon libre (31, 32) en engrènement avec ledit pignon fixe, dans le cas des étages à pignons droits (33, 34), le pignon fixe respectif (35, 36) étant disposé solidairement en rotation sur l'arbre d'entrée ou l'arbre intermédiaire (29), tandis que le pignon libre respectif (31, 32) de l'étage à pignon droit (33, 34) respectif pouvant être monté de manière rotative sur l'arbre intermédiaire ou l'arbre d'entrée (27) et pouvant être fixé par le biais d'un élément de commutation (37, 38) associé, et **en ce que** la deuxième machine électrique (14) est reliée solidairement en rotation à l'arbre intermédiaire (29).

2. Dispositif d'entraînement (7) selon la revendication 1, **caractérisé en ce qu'**au moins dans l'un des deux étages à pignons droits (33, 34) le pignon fixe respectif (35, 36) est placé solidairement en rotation sur l'arbre intermédiaire (29) et le pignon libre respectif (31, 32) est monté de manière rotative sur l'arbre d'entrée (27), le pignon fixe respectif (36) de cet étage à pignon droit (34) formant en outre le côté sortie (41) de la transmission (26) du fait que l'accouplement avec au moins une sortie (9, 10) est réalisé sur ce pignon fixe (36).

3. Dispositif d'entraînement (7) selon la revendication 1 ou 2, **caractérisé en ce qu'**un premier élément de commutation (37) et un deuxième élément de commutation (38) sont combinés pour former un dispositif de commutation (39) dont l'élément d'actionnement (40) permet d'actionner le premier élément de commutation (37) d'une part et le deuxième élément de commutation (38) d'autre part.

4. Dispositif d'entraînement (7) selon l'une des revendications précédentes, **caractérisé en ce que**, parmi les machines électriques (12, 13, 14 ; 13, 14), la deuxième machine électrique (14) est la machine électrique la plus puissante.

5. Dispositif d'entraînement (7) selon l'une des revendications précédentes, **caractérisé en ce que** la transmission (26) est suivie, du côté sortie (41), d'un dispositif distributeur (42) dont le côté entraînement est accouplé au côté sortie (41) et qui est associé à plusieurs sorties (9, 10) qui servent chacune à raccorder un essieu d'entraînement (2, 3) du véhicule électrique (1) dans la chaîne cinématique de véhicule automobile.

6. Dispositif d'entraînement (7) selon la revendication 5, **caractérisé en ce que** le dispositif distributeur (42) comprend une transmission différentielle (44), notamment un différentiel planétaire, une puissance d'entraînement introduite du côté entraînement du dispositif distributeur (42) pouvant être répartie par le biais de la transmission différentielle (44) entre les arbres de sortie (24, 25) qui sont chacun reliés à l'une des sorties (9, 10).

7. Chaîne cinématique de véhicule automobile (2) destinée à un véhicule électrique (1), notamment sous forme de véhicule utilitaire tout-terrain, ladite chaîne cinématique comprenant un dispositif d'entraînement (7) selon une ou plusieurs des revendications 1 à 6.

8. Chaîne cinématique de véhicule automobile (2) selon la revendication 7 et pourvue d'un dispositif d'entraînement selon la revendication 5 ou 6, **caractérisée en ce qu'**au moins un essieu avant entraînable (5) est relié en entraînement à une sortie (9) du dispositif d'entraînement (7) et au moins un essieu arrière entraînable (6) est relié en entraînement à un autre dispositif d'entraînement (10) du dispositif d'entraînement (7).

9. Véhicule électrique (1), notamment sous la forme d'un véhicule utilitaire tout-terrain, comprenant une chaîne cinématique de véhicule automobile selon la revendication 7 ou 8.

10. Procédé de fonctionnement d'un dispositif d'entraînement (7) selon une ou plusieurs des revendications 1 à 6, **caractérisé en ce que** l'on effectue les passages entre les rapports de changement de vitesses de la transmission (26) en compensant, au cours du passage respectif (13), une suppression d'un couple d'entraînement au moins de la première machine électrique au moins autant que possible par une augmentation d'un couple d'entraînement de la deuxième machine électrique (14).

11. Procédé selon la revendication 10, **caractérisé en ce que**, au cours du passage respectif, une synchronisation des vitesses de rotation est effectuée au moins par le biais de la première machine électrique (13) .
